# EUROPEAN PATENT APPLICATION

(11) **EP 3 892 951 A1**
(43) Date of publication of application: **13.10.2021**
(21) Application number: 19956865.0
(22) Date of filing: 18.12.2019
(51) Int. Cl.: F28G 3/10, F28F 19/00

(54) **HEAT EXCHANGE DEVICE**

(71) Applicant: Aurum Process Technology, S.L., 30500 Molina de Segura (Murcia) (ES)
(72) Inventor: LINARES GIL, Jesus Maria, 30500 MOLINA DE SEGURA (Murcia) (ES)
(74) Representative: Herrero & Asociados, S.L.
(86) International application number: PCT/ES2019/070861
(87) International publication number: WO 2021/123464

(57) **Abstract**

Heat exchanger device, for heat treatment of products by indirect contact with a heat transfer fluid, comprising a tank (1) to house a product to be heat treated; a heat exchange module (6), located along a longitudinal axis (5) in the centre of the tank (1), and a scraping system (8) to remove product residues by scraping. The heat exchange module (6) comprises a number of heat exchange elements (7) connected together and arranged perpendicularly to a longitudinal axis (5) in the centre of the tank (1), where each of the heat exchange elements (7) in turn comprises a large external surface (11) in contact with the product, an inlet pipe (12) for the heat transfer fluid and an outlet pipe (13) for the heat transfer fluid.

## Description

### Object of the invention

The present invention belongs to the technical field of machines designed for heat exchange with a product, in which such heat exchange includes for example heating, boiling or concentration processes. The products may be both foodstuffs, in a preferred embodiment, as well as any other type of products which must be subjected to heating or cooling processes.

More particularly, the present invention refers to a tank equipped with an extended heat transfer surface inside to heat the product, so that the ratio between the heat transfer surface and the volume of the tank is maximum, thus replicating, in the case of food treatment, the traditional domestic cooking. The tank is also equipped with a scraping device that allows the entire heat exchange surface of the machine to be scraped and also acts as a mixer and homogeniser for the product housed in the machine.

### Background of the invention

A wide variety of heat exchanger devices are known in the current state of the art, in which the heat exchanging media do not come into direct contact with the product to be changed. For example, the Spanish patent with publication number ES2333572 describes a machine consisting of a product holding tank in which a set of heat-exchange elements are presented inside, positioned parallel to the axis of the tank, together with spacers placed between the exchange elements and a scraping device for the internal wall of the tank, as well as the external surface of the heat-exchange elements.

The main disadvantage of this machine is that it uses separating elements placed between the heat exchange elements, which makes the construction of the machine more expensive and complicates its assembly. The design of this invention also makes it impossible to ensure that the scraper system has access to the entire heat-exchange surface, with the consequent risk of a layer of dirt accumulating which limits the heat-exchange capacity or which has a negative influence on the hygiene of the product, which is particularly important for food products.

Also known is the Spanish patent with publication number ES2596527, which refers to a small machine with a heating core formed by a single cylindrical element, designed for a reduced production capacity, typical of the restaurant and hotel industry.

It is therefore necessary to provide a heat exchanger device equipped with heat exchanging elements that do not require intermediate separators, as well as scraping elements that ensure the correct cleaning of the entire heat exchanging surface, thus avoiding the aforementioned drawbacks. In addition, the device must be of sufficient size and capacity to be used in large industry, and not only in small-scale applications.

### Description of the invention

The object of the invention consists of a heat exchanger device having an extended heat transfer surface, so that the ratio between such heat transfer surface and the total volume of the tank is maximum, thus optimizing the heat exchange.

To this end, the device basically comprises a tank to house a product to be treated; a heat exchanger module, preferably located transversally to the tank and intended to come into direct contact with the product, and scraping elements to scrape the surface of the heat exchanger module.

The heat exchanger module consists of a number of heat exchanger elements connected together, inside which a heat transfer fluid circulates. These elements, which in a preferential design have a plate geometry, are characterised by a large external surface area for heat exchange with the product to be treated.

Both the outer surfaces of the exchanger elements and the inner surface of the tank itself are scraped by the scraping elements, which remove any remaining product that may have adhered to them by friction. In a preferred embodiment, the scraper elements are assembled on a rotating support, transverse to the tank and driven by a motor. The rotating movement of the scraper elements also allows the product in the tank to be mixed and homogenised.

The option of the tank incorporating a closing lid is foreseen, to allow work under pressure, either negative or positive, for which it will also include a valve or gate for loading and unloading the product. The device can also have a system for rotating the tank to facilitate the unloading of the treated product.

The device described above is a simple, economic and versatile solution for heat treatment of various products, avoiding the need to incorporate intermediate separating elements and incorporating scraper elements that ensure correct cleaning of the entire heat exchange surface, thus avoiding the aforementioned drawbacks. In addition, the size of the device's components can be scaled to allow its use in both large and small-scale applications.

### Description of the drawings

To complement the description being made and in order to help a better understanding of the characteristics of the invention, according to a preferred embodiment of practical implementation of it, is accompanied as an integral part of that description, a set of drawings where with illustrative and not restrictive, has been represented as follows:

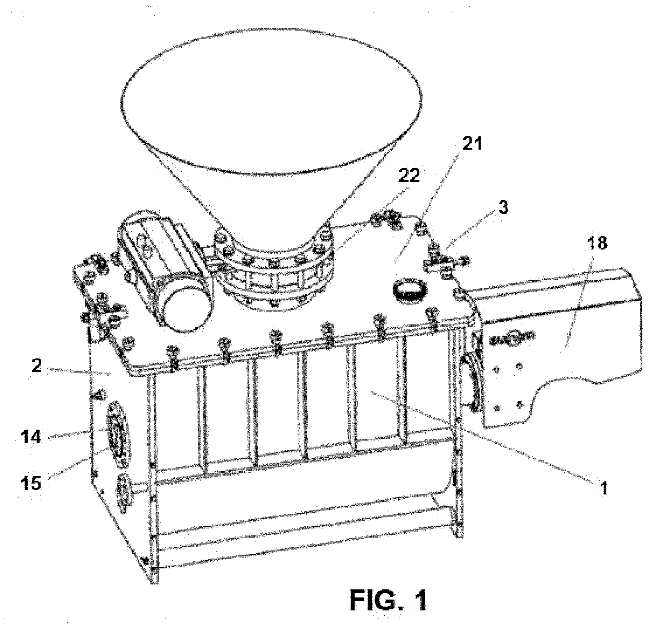

Figure 1.- Shows a top view of the heat exchanger device, showing its main constituent elements.

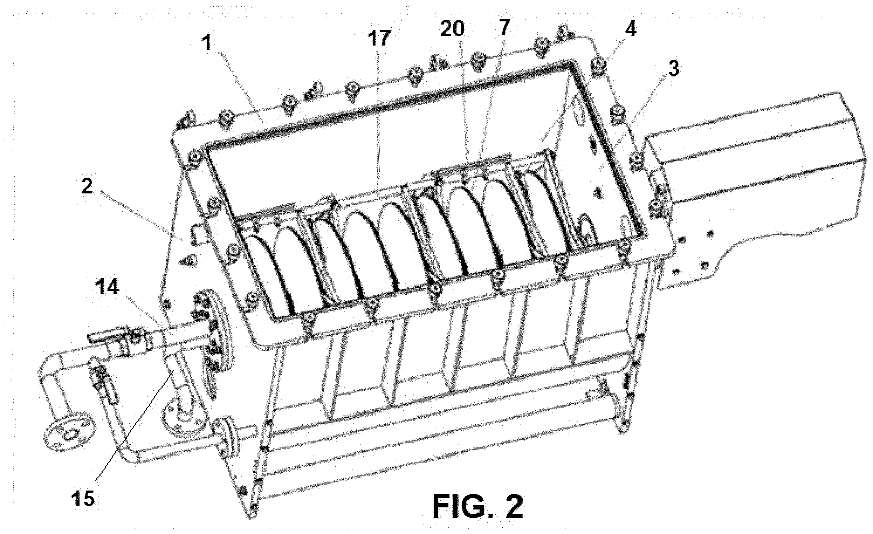

Figure 2.- Shows a top view of the device with the cover open, which allows the elements inside to be appreciated.

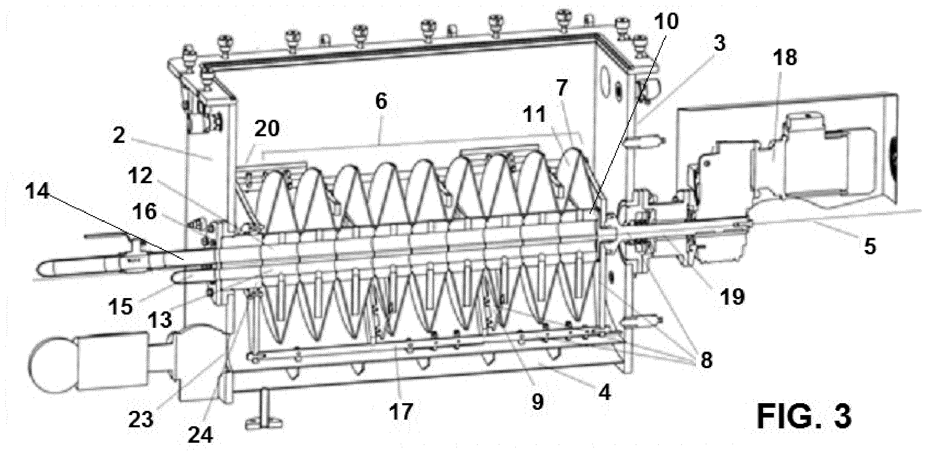

Figure 3.- Shows a view of a cross section of the device.

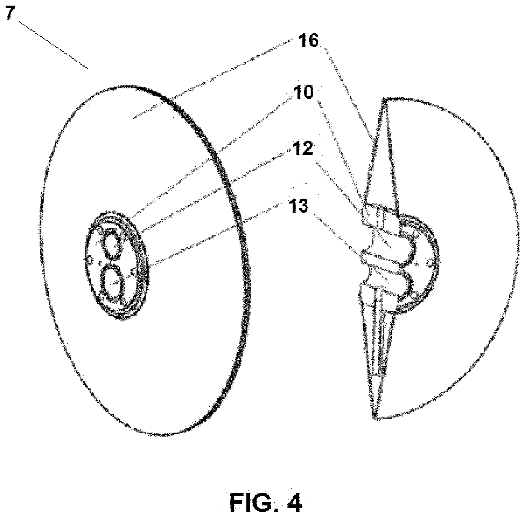

Figure 4.- Shows a detailed view of a heat exchanger element.

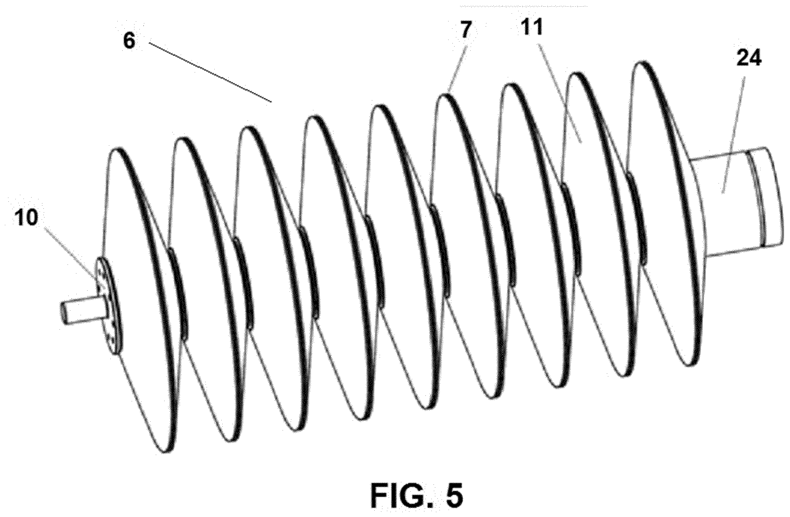

Figure 5.- Shows a view of the heat exchanger module

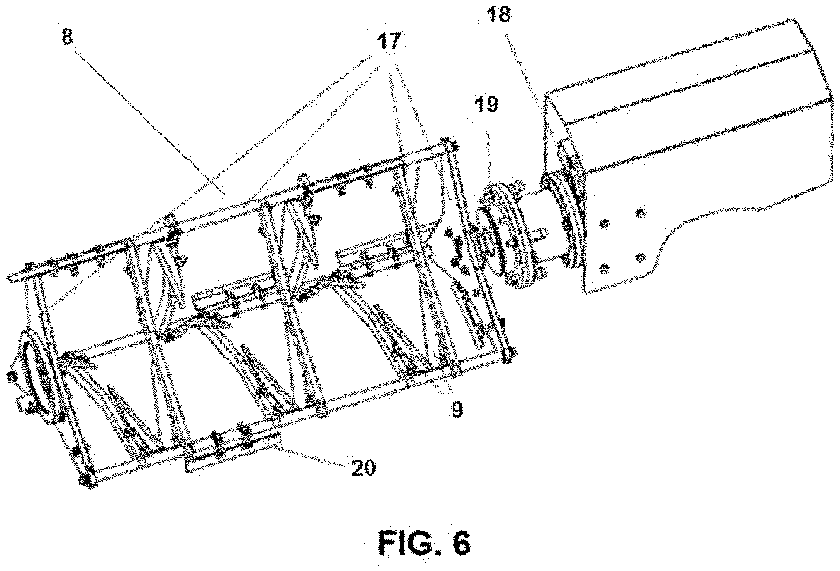

Figure 6.- Shows a detailed view of the scraping system.

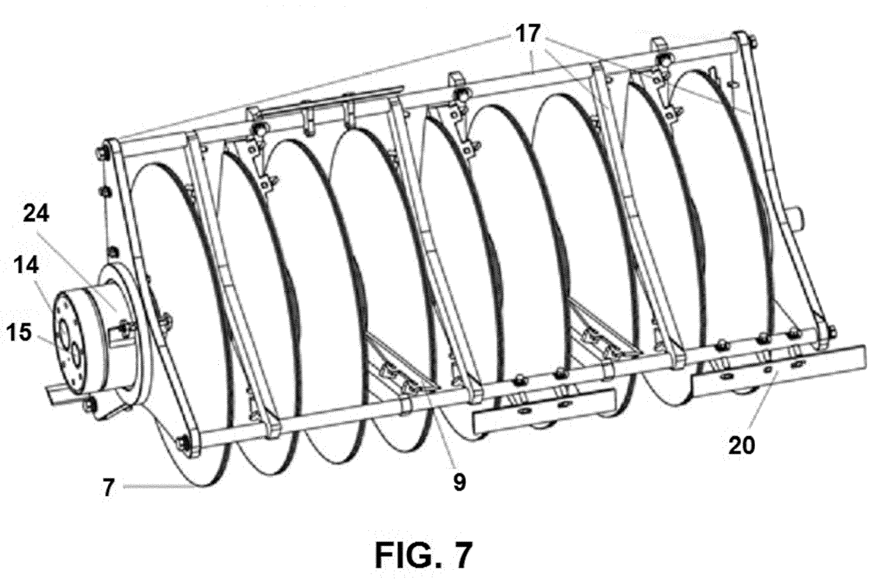

Figure 7.- Shows a view of the heat exchanger module coupled with the scraping system.

### Preferred embodiment of the invention

A detailed explanation of an example of a preferred embodiment of the object of the present invention is given below with the help of the above-mentioned figures.

The heat exchanger device described comprises a tank (1) housing a product to be heat treated; a heat exchange module (6) located along a longitudinal axis (5) in the centre of the tank (1), and a scraping system (8) consisting of a set of first (9) and second scraping elements (20), assembled on a support (17) with a rotation capacity.

The tank (1) has a first end (2), a second end (3) opposite and the previously mentioned longitudinal axis (5) in the middle, where the module (6) with an extended heat exchange surface is placed. The ends (2, 3) of the tank (1) delimit an internal surface (4) which in turn delimits the volume of the product housed inside and intended to be subjected to heat treatment. In this preferential version, the internal surface (4) also allows for additional heat exchange by means of an external jacket, not shown in the attached figures, which delimits a space through which a heat transfer fluid circulates.

The extended surface heat exchange module (6) comprises a number of heat exchange elements (7) which are connected to each other through their respective central parts (10). The module (6) is attached to the first end (2) of the tank (1) by means of a coupling (24).

The heat exchanger elements (7), which are characterised by their large external surface area (11) in contact with the product, are arranged perpendicularly to the longitudinal axis (5) and include internal pipes through which a heat transfer fluid circulates.

The heat exchanger elements (7), which in the version shown here have a cylindrical disc shape, can be made with any other shape provided that it allows the formation of a large external surface (11), such as a double cone or a double curved cap.

Each of the heat exchanger elements (7) has in its central part (10) a fluid inlet pipe (12) and a heat transfer fluid outlet pipe (13). Within a module (6), the pipes (12, 13) of each element are connected to the respective pipes (12, 13) of the adjacent elements. The heat transfer fluid flows into the module through an inlet (14) and an outlet (15), which are linked to the coupling (24).

The central part (10) can be welded to the respective central parts (10) of the adjacent heat exchanger elements (7), in which case the module (6) forms an inseparable body, or the elements (7) can be held together by internal clamping bars (16), which are attached by means of screws or a similar clamping system that allows assembly and disassembly.

The outer surface (11) of each of the heat exchanger elements (7) is scraped by the first scraper elements (9) of the scraping system (8).

As previously mentioned, these first scraper elements (9) are assembled on a rotating support (17), which is driven by a motor (18) located at the second end (3) of the tank (1), by means of a rotating shaft (19) which transmits the motor's rotating movement (18) and enters the tank (1) through the second end (3) and is concentric with the central longitudinal shaft (5) of the tank (1), where the heat exchange module (6) is located.

The rotating support (17) comprises the first scraper elements (9), arranged perpendicularly to the longitudinal axis (5), which scrape the external surface (11), and the second scraper elements (20), arranged longitudinally parallel to the longitudinal axis (5), for scraping the internal surface (4) of the tank (1).

The scraper elements (9, 20) can be made of a plastic or metal material that does not damage the surfaces to be scraped, and can have a certain elasticity or freedom of movement in their fixing system to adapt perfectly to the geometry of these surfaces. The rotation of the scraping system (8) also makes it possible to mix and homogenise the product contained in the tank (1).

The tank (1) has a rectangular top shape closed by a flat screwed top cover (21), which can be raised and lowered by means of pneumatic or hydraulic actuators to allow access to the inside of the tank (1). The cover (21) allows the inside of the tank (1) to be worked with positive pressure or under vacuum.

In this case, the cover (21) also includes a first gate (22) for loading the product to be treated, and a second gate (23) for unloading the product already heat-treated.

It is also foreseen that the device will incorporate a tank (1) rotation system to facilitate, by means of tipping, the discharge of the treated product.

In this preferred embodiment of the invention, the tank (1) has a lower semi-cylindrical shape to facilitate the scraping of the internal surface (4) by the second scraping elements (20) of the scraping system (8).

The heat exchanger elements (7) of the extended surface module (6) have a truncated cone shaped external heat exchange surface (11) and a central part (10) with perimeter holes through which the clamping bars (16) pass, allowing the module (6) to be assembled and disassembled.

The scraper elements (9, 20) of this preferred embodiment are made from rectangular plastic plates that are attached to the rotating support (17) by means of hinges that allow the scraper to move so that it is in proper contact with the surfaces to be scrapped.

The rotating support (17) is supported on one side by the pivot shaft (19), and on the other side it is supported by the coupling (24) of the module (6) at the first end (2) of the tank (1).

### Numerical references

1. Tank
2. First end
3. Second end
4. Internal surface
5. Longitudinal axis
6. Module
7. Heat exchanger element
8. Scraping system
9. First scraper elements
10. Central parts.
11. External surface
12. Heat transfer fluid inlet pipe
13. Heat transfer fluid outlet pipe
14. Heat transfer fluid inlet
15. Heat transfer fluid outlet
16. Clamping bars
17. Support
18. Engine
19. Axis of rotation
20. Second wiper elements
21. Cover
22. First gate
23. Second gate
24. Coupling

## Claims

1. Heat exchanger device, for heat treatment of products by indirect contact with a heat transfer fluid, the device comprising:
- a tank (1) housing a product to be heat-treated, comprising an internal surface (4) for contact with the product,
- a heat exchange module (6), located along a longitudinal axis (5) in the centre of the tank (1), and
- a scraping system (8) to remove product residues by scraping,
the device being **characterised in that** the heat exchange module (6) comprises heat exchange elements (7) connected to each other through their respective central parts (10) without the interposition of intermediate separating elements and with the entire external surface (11) accessible for the removal of product residues by the scraping system (8).

2. Heat exchanger device according to claim 1 wherein the heat exchanger elements (7) have cylindrical disc geometry.

3. Heat exchanger device according to any of the preceding claims wherein the tank (1) incorporates a tank rotation system for discharge by tipping of the treated product.

4. Heat exchanger device according to any of the preceding claims wherein the tank (1) has a lower semi-cylindrical shape to facilitate the scraping of the internal surface (4) by the second scraping elements (20) of the scraping system (8).

5. Heat exchanger device according to any of the preceding claims wherein the heat exchanger elements (7) of the heat exchange module (6) are solidly linked to each other by welding.

6. Heat exchanger device according to claim 1 wherein the scraping system (8) comprises:
- first scraper elements (9) arranged perpendicularly to the longitudinal axis (5) for scraping off product residues deposited on the external surface (11), and
- second scraper elements (20) positioned longitudinally parallel to the longitudinal axis (5), to remove by scraping any product residues deposited on the internal surface (4) of the tank (1),
wherein the first (9) and the second scraper elements (20) are flexible to adapt to the geometry of, respectively, the external surface (11) of the heat exchanger elements (7) and the internal surface (4) of the tank (1).
